# EUROPÄISCHE PATENTSCHRIFT

(11) **EP 0 638 738 B1**
(45) Veröffentlichungstag und Bekanntmachung des Hinweises auf die Patenterteilung: **06.10.1999**
(21) Anmeldenummer: 94110935.7
(22) Anmeldetag: 14.07.1994
(51) Int. Cl.: F16D 1/116, F16D 3/06, F16P 5/00

(54) **Welle-Nabe-Verbindung zur Übertragung von Drehmomenten zwischen zwei gleichachsigen Maschinenteilen**
Shaft-hub connection for torque-transmission between two coaxial machine parts
Liaison arbre-moyeu pour la transmission de couples entre deux parties de machine coaxiales

(30) Priorität: 11.08.1993 DE 4326861
(43) Veröffentlichungstag der Anmeldung: 15.02.1995
(73) Patentinhaber: J. M. Voith GmbH & Co. Beteiligungen KG, 89522 Heidenheim (DE)
(72) Erfinder: Lindenthal, Hans, D-89522 Heidenheim (DE)
(74) Vertreter: Dr. Weitzel & Partner

(56) Entgegenhaltungen:
- EP-A- 0 300 890
- WO-A-85/01998
- WO-A-87/05675
- DE-C- 3 910 887
- DE-U- 1 845 247
- GB-A- 2 024 367
- US-A- 1 813 209
- US-A- 2 598 780
- US-A- 4 392 759

## Beschreibung

Die Erfindung betrifft eine Welle-Nabe-Verbindung zur Übertragung von Drehmomenten zwischen zwei gleichachsigen Maschinenteilen.

Es ist bekannt, daß in Antriebssträngen, beispielsweise für den Einsatz in Walzwerken, bei denen das vom Motor erzeugte Drehmoment über Wellenstränge übertragen wird - beispielsweise wird im Walzwerk die Arbeitswalze über eine Gelenkwelle angetrieben -, infolge von Störungen auf der anzutreibenden Maschinenseite, bei denen eine Drehmomentübertragung vom An- zum Abtrieb nicht mehr gegeben ist, bei weiterem Betrieb der Antriebsquelle eine Verformung im Antriebsstrang infolge Torsion auftreten und bis zum Torsionsbruch führen kann. Der Torsionsbruch weist im Extremfall einen Bruchverlauf von 45° zur Torsionsachse aufgrund der während der Verdrehung auftretenden Zugspannungen auf. Beim Walzwerk ist beispielsweise eine Drehmomentübertragung zwischen Antriebsquelle und Arbeitswalze beim Festfahren der Arbeitswalze nicht mehr gegeben. Nach dem Bruch, d.h. in dem Beispiel nach der Trennung der Arbeitswalze von der Antriebsquelle und bei gleichzeitigem weiteren Betrieb der Antriebsquelle, wird die Bruchfläche auf der mit der Antriebsquelle noch verbundenen Seite des Antriebsstranges gegen die jetzt feststehende, auf der Seite der Arbeitswalze liegende Bruchfläche verdreht. Infolge der Überlagerung der Bruchflächen und aufgrund der Trägheits- und Drehzahlunterschiede zwischen den durch den Bruch entstandenen Teilen des Antriebsstranges - dem mit der Antriebsquelle verbundenen und dem mit der Arbeitswalze verbundenen - erfährt der mit der Antriebsquelle verbundene Teil eine axiale Verschiebung in seine Richtung. Im allgemeinen führt die fortlaufende Antriebsbewegung durch den Motor und der schräg ausgebildete Bruch zum Auftreten hoher Axialkräfte, die eine Lageverschiebung der einzelnen Elemente des Antriebsstranges, im Extremfall ein Ausheben aus der Bauteile aus ihrer Lagerverankerung bedingen. Eine bekannte Lösung zur Vermeidung derartiger Zwischenfälle besteht darin, die Verbindung zwischen Antriebsquelle und anzutreibenden Element nicht einteilig in Form eines Wellenstranges auszuführen sondern wenigstens zweiteilig und diese beiden Teile derart miteinander zu verbinden, daß gleichzeitig die Drehmomentübertragung realisiert wird und auch entsprechende Überlastsicherungsmechanismen, die bei hohen Axialkräften die Drehmomentübertragung unterbinden, wirksam werden. In den bekannten Lösungen findet als Element eine Sicherheitskupplung Verwendung, die auch die drehfeste Verbindung zwischen den beiden Teilen beispielsweise den beiden Teilen des Wellenstranges realisiert. Die Sicherheitskupplung dient zur Übertragung hoher Drehmomente und ist mit einer Einrichtung zur Drehmomentbegrenzung versehen, wie beispielsweise aus der DE - 29 23 902 bekannt.

Die Kupplung weist dort mindestens eine dünnwandige Hülse auf, die eine sich axial erstreckende Wand einer im wesentlichen ringförmigen Kammer bildet, die mit Druckmittel beaufschlagbar ist, um diese Hülse im wesentlichen elastisch in radialer Richtung zu deformieren und mit einer Fläche eines Elementes, an dem die Kupplung befestigt werden soll, zu verklemmen. Dazu gibt es zwei Möglichkeiten, entweder wird die Kupplung zwischen den beiden zu verbindenden Maschinenteilen wirksam, indem die Kupplung als Hohlbuchse, bestehend aus zwei miteinander verschweißten Hülsen, ausgebildet ist, deren Hohlraum mit Druckmittel beaufschlagbar ist und durch radiale Deformation der Hülsen die beiden Maschinenteile miteinander verspannt, oder, die Kupplung umschließt beide Maschinenteile und bewirkt den Reibschluß zwischen beiden durch Deformation nur einer Hülse. An die ringförmige Kammer schließt sich eine Kanalanordnung an, der ein Sicherungs-bzw. Kupplungsentlastungsmechanismus zugeordnet ist, der durch Relativbewegung zwischen den reibschlüssig zu verbindenden Flächen der beiden Maschinenteile oder eine bestimmte Torsionsdeformation derselben in einen Zustand gebracht werden kann, bei dem das in der ringförmigen Kammer befindliche Druckmittel zur Entlastung der ringförmigen Kammer aus dieser durch die Kanalanordnung ausströmen kann. Die Kupplung wird somit auf das gewünschte Auslösedrehmoment eingestellt. Bei Überschreiten dieses Drehmomentes im Falle einer Überlastung rutscht die Kupplung durch. Das übertragbare Drehmoment fällt ab, denn der wirksame Haftreibungskoeffizient geht in den Gleitreibungskoeffizienten über. Es findet in Umfangsrichtung eine Relativbewegung zwischen Welle und Nabe statt. Ein beispielsweise auf der Welle befestigter Abscherring schert ein mit der Kanalanordnung bzw. der ringförmigen Kammer der Kupplung in Verbindung stehendes Abscherventil ab.

Nach dem Abscheren des Abscherventiles bzw. der Abscherventile kann das unter hohem Druck stehende Öl frei expandieren und das übertragbare Drehmoment fällt innerhalb weniger Millisekunden auf Null ab.

Zur Absicherung gegen Axialkraftüberlastung wird die Kupplung auf eine entsprechende zulässige zu übertragende Axialkraft eingestellt, d.h. der Innendruck der ringförmigen Kammer wird derart festgelegt, daß damit der Reibschluß nur bis in Höhe der kritischen Axialkraft aufrechterhalten werden kann. Bei Überschreiten der zulässigen Axialkraft, beispielsweise infolge eines Bruches, wird der Reibschluß aufgehoben und es kommt zur Relativbewegung in axialer Richtung zwischen der Kupplung und den damit verbundenen Elementen. Der Nachteil dieser Ausführungsform besteht darin, daß die Kupplung auf eine entsprechende Axialkraft eingestellt und dementsprechend ausgelegt werden muß. Eine gleichzeitige Übertragung hoher Drehmomente mit der selben Kupplung ist nur in den seltensten Fällen realisierbar, denn die zur Übertragung des gewünschten Drehmomentes und der noch zulässigen Axialkraft erforderlichen Flächenpressungen zwischen Kupplung, Welle und Nabe können entsprechend den Einsatzbedingungen voneinander abweichen. Aufgrund der Gleichheit der Kräfte, die zur Aufhebung des Reibschlusses in Umfangsrichtung und in axialer Richtung erforderlich sind, und dem Wunsch bereits bei im Verhältnis zur Umfangskraft relativ geringen Axialkräften der Entlastungsmechanismus der Kupplung zu betätigen, können mit derartig ausgelegten Kupplungen nur geringe Drehmomente übertragen werden.

Eine weitere Möglichkeit besteht darin, bei einer derartigen Kupplung, die Einrichtung zur Drehmomentbegrenzung, d.h. zum Lösen des Reibschlusses, bei einer festgelegten Axialkraft auszulösen, indem die Größen der Axialkräfte gemessen werden und der Meßwert in ein Signal zum Auslösen des Sicherungsmechanismus gegenüber Drehmomentbegrenzung umgewandelt wird. Diese Möglichkeit zeichnet sich jedoch durch einen sehr hohen meßtechnischen - und steuerungstechnischen Aufwand aus, da die Reaktionszeiten sehr kurz sein müssen.

Eine gattungsgemäße Ausführung in Form einer mechanischen Überlastsicherungseinrichtung zur Sicherung gegenüber Axialkraftüberlastung ist aus dem deutschen Gebrauchsmuster mit der Nr. DE 18 54 247 O1 in Form einer Aufsteckkupplung für eine Zapfwelle bekannt. Diese kann als Welle-Nabe-Verbindung angesehen werden. Die Aufsteckkupplung weist einen nach innen gerichteten, radial federnden, vorzugsweise halbkugeligen Vorsprung auf, der bei aufgesteckter Kupplung in eine umlaufende Nut der Zapfwelle eingreift. Der Eingriff des halbkugeligen Vorsprunges in die umlaufende Nut der Zapfwelle ist für eine bestimmte Größe der auftretenden Axialkraft ausgelegt. Bei Überschreitung der Größe der Axialkraft wird der Vorsprung aus der Nut herausgedrückt, und die Verbindung zwischen Aufsteckkupplung und Zapfwelle wird unterbrochen. Wesentliche Nachteile einer derartigen Anordnung bestehen im wesentlichen darin, daß die halbkugelförmigen Vorsprünge ständig dynamischen Beanspruchungen ausgesetzt sind. Des weiteren ist die Verbindung von den Werkstoffen derart auszulegen, daß geringe Axialschübe, welche unter einem voreingestellten Grenzwert der Axialkraft liegen, ohne Beschädigung der einzelnen Elemente von Welle und Nabe kompensiert werden können.

Der Erfindung liegt deshalb die Aufgabe zugrunde, eine Welle-Nabe-Verbindung derart weiterzuentwickeln, daß die genannten Nachteile beseitigt werden. Die Welle-Nabe-Verbindung soll zur Übertragung hoher Drehmomente geeignet sein, beispielsweise für den Einsatz bei Gelenkwellen, und der Entlastungsmechanismus bereits auf geringe Axialkräfte reagieren können.

Die konstruktive Umsetzung soll derart erfolgen, daß der Überlastsicherungsmechanismus bei einer bestimmten Größe der wirkenden Axialkraft ausgelöst wird. Im Vordergrund steht dabei eine kostengünstige Realisierung von Aufbau und Funktion mit einer geringen Anzahl einfach gestalteter Bauteile. Die gesamte Anordnung soll sich durch einen geringen Fertigungs- und Montageaufwand sowie ein einfaches und schnelles Wiedereinrichten nach dem Auslösefall auszeichnen.

Diese Aufgabe wird durch die Merkmale des Anspruchs 1 gelöst. Die bevorzugten Ausführungsmöglichkeiten sind in den Unteransprüchen wiedergegeben.

Die bereits bekannte zweiteilige Ausführung einer Verbindung zwischen Antriebsquelle und anzutreibenden Element in Form einer drehfesten Verbindung zwischen den zwei Teilen wird durch eine drehfeste Verbindung mit axialem Längenausgleich ersetzt. Durch den zusätzlichen Einsatz eines Überlastsicherungsmechanismus, der erst ab Überschreiten eines einstellbaren Grenzwertes einer bestimmten Axialkraftgröße wirksam wird, kann im Fall eines Bruches oder sehr hoher Axialkräfte eine hohe Beanspruchung der einzelnen Elemente des Antriebsstranges vermieden werden. Die Axialkraft wird durch die Relativverschiebung der beiden Maschinenteile zueinander mittels des axialen Längenausgleiches, die durch das Wirken des Überlastsicherungsmechanismus ausgelöst wird, kompensiert. Als Verriegelungselemente finden Bolzen mit keilförmig abgeschrägter Kopffläche (Keilflächenbolzen) Verwendung. Dabei kann beispielsweise der gesamte Kopf kegelförmig ausgeführt sein oder aber die Kopffläche ist nur im Querschnitt betrachtet keilförmig. Die Bolzen selbst können verschiedenartig ausgeführt sein; diese können beispielsweise einen kreisförmigen oder aber eckigen Querschnitt aufweisen.

Die Verriegelungselemente werden vion einem der beiden Maschinenteile - beispielsweise vom ersten Maschinenteil - getragen und in dazu gehörige Aufnahmemulden im anderen, in diesem Fall im zweiten Maschinenteil eingedrückt. Die Geometrie der Verriegelungselemente ermöglicht die Übertragung großer Axialkräfte, was sich im Vergleich zu konventionellen Verriegelungselementen in einer Verringerung der Baugröße niederschlägt. Die dazu komplementär ausgebildeten keilförmigen Mulden stellen an die Fertigungs- und Montagegenauigkeit geringere Anforderungen als bei anderen formschlüssigen Verbindungen, denn Abweichungen können bis in den mm - Bereich durch sie ausgeglichen werden.
Des weiteren ist eine genauere Anpassung an bestimmte nicht zu überschreitende Axialkräfte möglich. Der Einsatz von Keilflächenbolzen zeichnet sich daher durch einen geringeren Verschleiß und eine höhere Verfügbarkeit des gesamten Überlastsicherungsmechanismus aus.

Über die Anzahl der Verriegelungselemente und/oder die Änderung der Geometrie - insbesondere des Winkels der Abschrägung - und/oder die Größe der Vorspannkraft für die Verriegelungselemente ist der Grenzwert der Axialkraft einstellbar, dessen Überschreitung ein Auslösen des Überlastsicherungsmechanismus bewirkt, d.h. die relative Verschiebung der beiden Maschinenteile gegeneinander.

Die in einer bevorzugten Ausführung erfolgte geteilte Ausführung des zweiten Maschinenteiles, - d.h. die Unterteilung des zweiten Maschinenteiles in zwei Abschnitte, wobei der erste Abschnitt unmittelbar in drehfester Verbindung, jedoch mit der Möglichkeit zum axialen Längenausgleich, zum ersten Maschinenteil steht, und der zweite Abschnitt, im Beispiel auch als Hohlkörper bezeichent, unmittelbar nur mit den Verriegelungselementen des Überlastsicherungsmechanismus und mittelbar mit dem ersten Abschnitt verbunden ist - ermöglicht das Vorsehen einer geringen axialen Verschiebarkeit zwischen beiden Abschnitten. Vorzugsweise sind zwischen den beiden Abschnitten Dämpfungsglieder, insbesondere Federelemente vorgesehen.

Die geteilte Ausführung mit der Möglichkeit eines geringen axialen Spiels zwischen den beiden Abschnitten und die Anordnung von Federelementen, vorzugsweise Tellerfedern zwischen diesen beiden Abschnitten bieten mehrere Vorteile:
1) Der Überlastsicherungsmechanismus, speziell die Verriegelungselemente werden von dynamischen Beanspruchungen weitestgehendst frei gehalten.
2) Axialschübe aufgrund von Axialkräften geringerer Größe als der eingestellte Grenzwert der Axialkraft werden kompensiert bzw. gedämpft.
3) Die Verriegelungselemente haben im Leerlauf keine Zentrierwirkung für beide Maschinenteile.

Die Anordnung der Federelemente zwischen den beiden Abschnitten des zweiten Maschinenteiles erfolgt in einem abgedichteten Raum, der wenigstens zwei Schmiermittelkanäle aufweist - einen Schmiermittelzufuhr - und einen Schmiermittelabfuhrkanal. Während des Betriebes ist der Raum mit Schmiermittel, vorzugsweise Fett gefüllt. Bei Auftreten eines Axialschubes infolge einer hohen Axialkraft, der zum Auslösen des Überlastsicherungsmechanismus führt, gelangt das Schmiermittel über den Abfuhrkanal in das innere des zweiten Abschnittes und von dort aufgrund der Fliehkraftwirkung an Kanäle die direkt mit den Aufnahmemulden in Verbindung stehen, um im Moment des Ausrückens der Verriegelungselemente die entsprechenden Flächen der Aufnahmemulde zu schmieren.

Als Verriegelungselemente können in diesem Fall auch Zylinderrollen, Kugeln oder Bolzen mit abgeschrägter Keilfläche (Keilflächenbolzen) eingesetzt werden, wobei letztgenannte bevorzugt verwendet werden, da die Axialkräfte hier über große Flächen auf den Keilflächenbolzen übertragen werden, während bei Zylinderrollen und Kugeln infolge der Punkt-oder Linienberührung hohe Hertzsche Pressungen auftreten. Der Einsatz von Keilflächenbolzen zeichnet sich daher durch einen geringeren Verschleiß und eine höhere Verfügbarkeit des gesamten Überlastsicherungsmechanismus aus. Keilflächen und die dazu komplementär ausgebildeten keilförmigen Mulden stellen an die Fertigungs- und Montagegenauigkeit geringere Anforderungen als bei anderen formschlüssigen Verbindungen, denn Abweichungen können bis in den mm - Bereich durch sie ausgeglichen werden.

Die erfindungsgemäße Lösung der Aufgabe wird nachfolgend anhand der Figuren erläutert. Darin ist im übrigen folgendes dargestellt:
- Fig. 1: verdeutlicht schematisch das Grundprinzip eines formschlüssigen Überlastsicherungsmechanismus gegen Axialkraftüberlastung bei gleichzeitiger Möglichkeit der Übertragung hoher Drehmomente;
- Fig. 2: zeigt schematisch ein weiteres Ausführungsbeispiel einer erfindungsgemäßen Anordnung zur Absicherung gegen Axialkraftüberlastung.

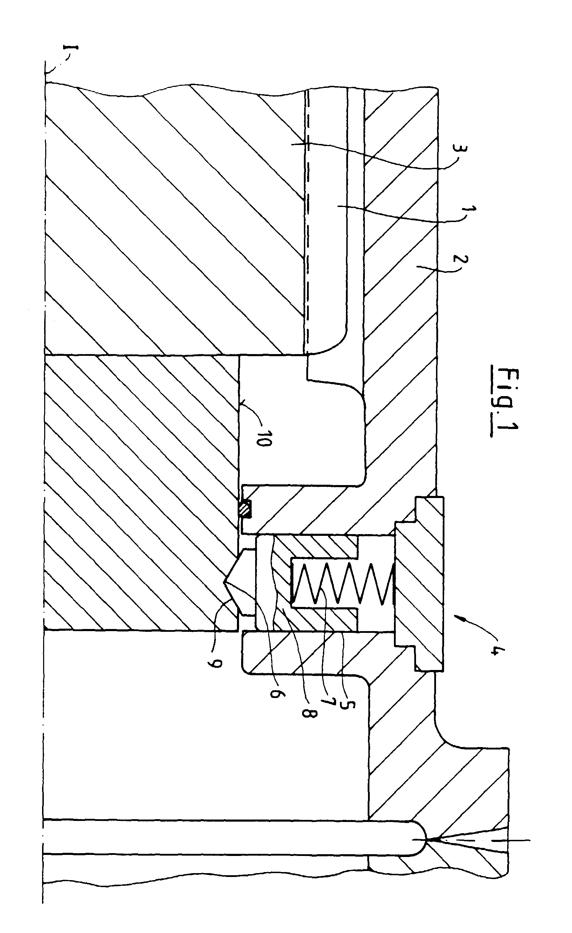

Die Figur 1 zeigt eine Welle-Nabe-Verbindung 1 zur Übertragung von Drehmomenten zwischen zwei gleichachsigen Maschinenteilen - einem ersten Maschinenteil 2 und einem zweiten Maschinenteil 3 - und zur Realisierung eines axialen Längenausgleiches. Dazu ist die Welle-Nabe-Verbindung 1 hier als Keilwellenverbindung mit Schiebe- bzw. Gleitsitz ausgeführt. Die zusätzliche Anordnung eines Überlastsicherungsmechanismus 4 bewirkt, daß die Längsbeweglichkeit innerhalb der Welle-Nabe-Verbindung 1 erst bei einer bestimmten Axialkraftgröße ermöglicht wird.

Der Überlastsicherungsmechanismus 4 umfaßt wenigstens eine Verriegelungseinheit 5, die in einem der beiden Maschinenteile, hier im ersten Maschinenteil 2, gelagert ist. Die Verriegelungseinheit umfaßt ein Verriegelungselement 6, und im einfachsten Fall eine Feder 7 und einen Anschlag 8, der die mögliche Vorspannkraft der Feder 7 begrenzt und mit dem Verriegelungselement 6 eine bauliche Einheit bildet. Das Verriegelungselement 6 wird durch die Feder 7 in eine am zweiten Maschinenelement dazugehörige Aufnahmemulde 9 gedrückt und geht somit mit diesem eine formschlüssige Verbindung ein. Der Formschluß dient nur der Aufnahme axial gerichteter Kräfte, Umfangskräfte werden auf diesem Wege nicht übertragen.

Über die Anzahl der am Umfang 10 des zweiten Maschinenteiles 3 eingreifenden Verriegelungselemente 6 und die eingestellte Vorspannung der Federn 7 wird die Größe der Axialkraft festgelegt, die ein Aufheben des Formschlusses bewirkt, d.h. die Komponenten der Axialkraft, die der Vorspannkraft der Feder bzw. Federn entgegenwirken und zur Aufhebung des Reibschlusses führen, jeweils in Abhängigkeit vom Keilflächenwinkel.

Bei Überschreiten des voreingestellten Grenzwertes der Axialkraft schieben sich die Verriegelungselemente 6 unter axialer Verschiebung des zweiten Maschinenteiles 3 in radialer Richtung nach außen, d.h. von der Mittelachse I der beiden Maschinenteile weg und spannen jeweils die Federn 7 weiter vor. Das Verriegelungselement 6 verschiebt sich entsprechend der Verschiebung des zweiten Maschinenteiles 3 gegen das erste Maschinenteil 2. Die Bewegung jedes einzelnen Verriegelungselementes 6 erfolgt in diesem einfachen Fall so lange, bis der Anschlag 8 seine Endstellung erreicht hat, bzw. das Verriegelungselement 6 aus der Aufnahmemulde 9 herausgerutscht ist. Die axiale Verschiebung des Maschinenteils 3 gegen das Maschinenteil 2 wird durch den axialen Längenausgleich der Keilwellenprofilverbindung 1 mit Schiebe-bzw. Gleitsitz ermöglicht.

In den Erläuterungen zu Figur 1 wird davon ausgegangen, daß das zweite Maschinenteil 3 sich auf der Abtriebsseite befindet und sich somit gegen das erste Maschinenteil 2, das mit der Antriebsquelle wenigstens mittelbar in Verbindung steht, in axialer Richtung verschiebt. Möglich ist jedoch auch der umgekehrte Fall- das erste Maschinenteil 2 verschiebt sich gegen das zweite Maschinenteil 3 in axialer Richtung.

Die Ausführung der Verriegelungseinheiten 4 kann sehr vielgestaltig sein. Als Verriegelungselemente 6 finden Bolzen mit keilförmig abgeschrägtem Kopf, Kugeln oder Zylinderrollen Verwendung. Vorzugsweise werden jedoch Bolzen mit keilförmig abgeschrägtem Kopf eingesetzt, da mit diesen an den Kraftübertragungsstellen ein großflächiger Kontakt realisiert werden kann, der sich letztendlich in einer Verminderung des Verschleißes gegenüber dem Einsatz von Kugeln oder Zylinderrollen, die nur eine Punkt-oder Linienberührung an den Kontaktstellen in den Aufnahmemulden zulassen, äußert. Die zu den Verriegelungselementen 6 zugehörigen Aufnahmemulden 9 sind vorzugsweise keil- bzw. kegelförmig ausgebildet.

Die Erzeugung der Vorspannkraft erfogt vorzugsweise über Federelemente, hier eine Feder 7, wobei im dargestellten Beispiel der Weg des Federelementes 7 im Auslösefall durch den Anschlag 8 begrenzt ist.

Zur Verhinderung des Zurückrutschens der Verriegelungselemente 6 in die Aufnahmemulden 9 trägt eine entsprechende Ausgestaltung der Verriegelungseinheit 4 bei. Ein Beispiel einer Möglichkeit einer derartigen Ausgestaltung ist aus einem Sonderdruck aus "Stahl und Eisen" 108 (1988) Heft 14/15 bereits bekannt.

Die Ausführung der Verriegelungseinheit 4 erfolgt immer entsprechend den Einsatzbedingungen und den zu erfüllenden Funktionen. Die in Figur 1 dargestellte Ausführung ist nur ein Beispiel. Der Einsatz anderer bereits bekannter Verriegelungseinheiten mit dem gleichen Grundprinzip ist ebenfalls denkbar.

Zur Realisierung einer drehfesten Verbindung zwischen erstem und zweitem Maschinenteil mit axialer Längenausgleichsmöglichkeit werden aufgrund des geringen Fertigungsaufwandes bevorzugt Keilwellenprofilverbindungen mit Schiebe-bzw. Gleitsitz eingesetzt. Als weitere Möglichkeiten sind jedoch auch wälzgelagerte Teleskopführungen oder Kugelführungen denkbar.

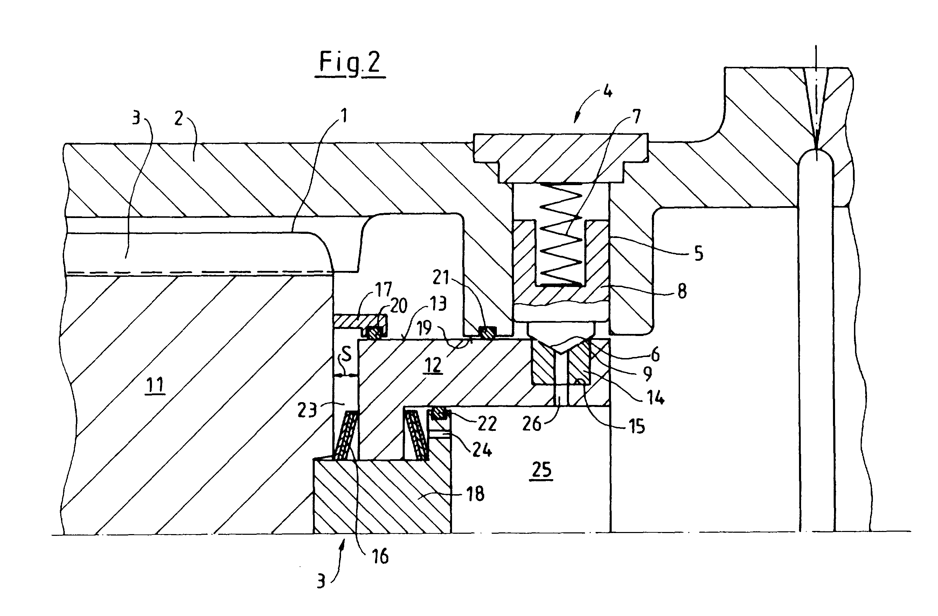

Figur 2 verdeutlicht schematisch ein weiteres Ausführungsbeispiel der erfindungsgemäßen Anordnung zur Drehmomentübertragung mit Axialkraftbegrenzung. Bei dieser Ausführung ist der Überlastsicherungsmechanismus zwischen erstem 2 und zweiten Maschinenteil 3 angeordnet, wobei das erste Maschinenteil 2 wenigstens eine Verriegelungseinheit 4 trägt. Der Grundaufbau entspricht dem in Figur 1 beschriebenen, weshalb gleiche Bezugszahlen für gleiche Bauteile verwendet werden. Das zweite Maschinenteil 3 ist jedoch zweiteilig ausgeführt. Der zum Formschluß erforderliche Gegenpart ist auf einem ersten Abschnitt 12 des zweiten Maschinenteiles 3 angeordnet, der mittelbar mit dem zweiten Abschnitt 11 des zweiten Maschinenteiles 3 verbunden ist, jedoch ein geringes axiales Spiel s zu diesem aufweist bzw. zuläßt. Dieser erste Abschnitt 12, hier als Hohlkörper bezeichnet, weist an seinem Außenumfang 13 die Aufnahmemulden 9 zur Aufnahme der Verriegelungselemente 6 auf. Da diese Aufnahmemulden 9 hohen Beanspruchungen und damit Verschleiß ausgesetzt sind, ist eine entsprechende Oberflächenbehandlung sinnvoll. Aus Fertigungs- und Kostengründen sind daher vorzugsweise die Aufnahmemulden 9 in separate Einsatzstücke 14 eingearbeitet, die etwas größer als die Aufnahmemulden 9 sind und am Außenumfang des Hohlkörpers angeordnet sind. Die Einsatzstücke 14 werden dann einer seperaten Oberflächenbehandlung unterzogen. In der Regel werden diese wärmebehandelt, vorzugsweise gehärtet.

Die Einsatzstücke 14 sind in entsprechenden Ausnehmungen 15 am Außenumfang 13 des Hohlkörpers angeordnet und zwar vorzugsweise derart, daß die Außenfläche eines jeden Einsatzstückes mit dem Außenumfang 13 des Hohlkörpers 12 abschließt.

Eine weitere Möglichkeit besteht darin, daß nur ein Einsatzstück 14 in Form eines zweiteilig ausgeführten Ringes vorgesehen ist, in welches die Aufnahmemulden 9 eingearbeitet sind, wobei es auch denkbar ist, die Verriegelungselemente in einer in den zweiteiligen Ring eingearbeiteten, vorzugsweise keilförmigen Nut aufzunehmen. Der Hohlkörper 12 weist dann zur Aufnahme des Einsatzstückes eine am Umfang 13 verlaufende ringförmige Ausnehmung 15 auf.

Zwischen Hohlkörper 12 und zweitem Abschnitt 11 sind in dieser Ausführung Federelemente 16, vorzugsweise Tellerfedern angeordnet. Diese Anordnung der Federelemente 16 zusammen mit der zweigeteilten Ausführung des zweiten Maschinenteils bietet mehrere Vorteile:
1) Freihalten der Verriegelungselemente 6 von dynamischen Beanspruchungen
2) Dämpfung im Leerlauf und beispielsweise beim Einsatz in Walzwerken während des Walzenwechsels
3) Kompensation kleiner Axialschübe

Der Hohlkörper 12 ist derart angeordnet, daß dieser von zwei mit dem zweiten Abschnitt 11 des zweiten Maschinenteiles 3 eine bauliche Einheit bildenden Bauteilen 17 und 18 und einer Innenfläche 19 des ersten Maschinenteiles 2 geführt wird. An den Führungsstellen 20, 21 und 22 ist jeweils eine Abdichtung vorgesehen.

Die Federn 16 befinden sich somit ein einem abgedichteten Raum 23. Diesem ist wenigstens eine, hier nicht dargestellte Schmiermittelzufuhr- und eine, hier dargestellte Schmiermittelabfuhrleitung 24 zugeordnet. Die Schmiermittelkanäle sind so angeordnet, daß im Falle eines Ausrückens der Verriegelungselemente 6 aus den Aufnahmemulden 9 die Muldenflächen geschmiert werden. Im Ausführungsbeispiel werden geringe Axialkräfte über die Tellerfederanordnung 16 zwischen den beiden Abschnitten 11 und 12 des zweiten Maschinenteiles 3 abgebaut, wobei die axiale Verschiebemöglichkeit des zweiten Abschnittes gegen den ersten ausgenutzt wird. Bei hohen Axialkräten erfolgt nach vollständiger Ausnutzung der axialen Verschiebemöglichkeit s eine gemeinsame Verschiebung beider Abschnitte 11 und 12 bei Auslösung des Überlastsicherungsmechanismus. Die Verriegelungselemente 6 rutschen aus den Aufnahmemulden 9 vollständig heraus und die Verriegelungselemente 6 schleifen im ausgerückten Zustand auf dem Außenumfang 13 des Hohlkörpers 12. Das Schmiermittel gelangt über den Schmiermittelabfuhrkanal 24 in den Innenraum 25 des Hohlkörpers 12 und von da aufgrund der Fliehkraft über einen Kanal 26, der sich durch die Hohlkörperwand und durch das Einsatzstück 14 bis in die Aufnahmemulde 9 erstreckt, an die Flächen der Aufnahmemulde 9.

Die in Figur 2 wiedergegebene Ausführung ist nur schematisch dargestellt, auf die Wiedergabe konstruktiver Einzelheiten und Umsetzungsmöglichkeiten wurde verzichtet. Weitere die Funktion der Ausführung nicht beeinträchtigende konstruktive Detailierungen sind möglich und entsprechend den Einsatzerfordernissen festlegbar. Eine derartige Ausführung einer zweigeteilten Form des zweiten Maschinenteiles ist allgemein bei jeder Welle-Nabe-Verbindung mit formschlüssigen Überlastsicherungsmechanismus gegen Axialkraft möglich. Als Verriegelungselemente können dabei beispielsweise Keilflächenbolzen, Zylinderrollen, kugelförmige Elemente e.t.c. Verwendung finden.

Das hier beschriebene Grundprinzip ist bei allen Anwendungsfällen, bei denen die Drehmomentübertragung realisiert und gegenüber Axialkraft abgesichert werden muß, einsetzbar, beispielsweise in Antriebssträngen mit Gelenkwellen bzw. bei Gelenkwellen. Die konstruktive Ausgestaltung im Detail und die Anpassung an besondere Einsatzbedingungen liegen dabei im Ermessen des Fachmannes.

## Patentansprüche

1. Welle-Nabe-Verbindung zwischen zwei gleichachsigen Maschinenteilen zur Übertragung hoher Drehmomente in einem Antriebsstrang - einem ersten antriebsseitigen Maschinenteil (2) und einem zweiten abtriebsseitigen Maschinenteil (3), mit den folgenden Merkmalen :
1.1 die beiden Maschinenteile (2, 3) sind ab einer bestimmten Axialkraft relativ zueinander verschiebbar, und sonst drehfest miteinander verbunden;
1.2 zwischen beiden Maschinenteilen (2, 3) ist ein formschlüssiger Überlastsicherungsmechanismus (4) mit Verriegelungselementen (6) vorgesehen, durch die die beiden Maschinenteile (2, 3) gegen Axialverschiebung bis zu einem bestimmten einstellbaren Grenzwert verriegelt werden;
1.3 der Überlastsicherungsmechanismus (4) ist derart gestaltet und angeordnet, daß bei Überschreiten des Grenzwertes der Formschluß aufgehoben wird;
1.4 die einzelnen Verriegelungselemente (6) sind im Sinne des Verriegelns vorspannbar;
1.5 jedes einzelne Verriegelungselement (6) ist als Bolzen mit im Querschnitt betrachtet keilförmig abgeschrägten Kopfflächen ausgebildet;
1.6 jedes Verriegelungselement wird vom ersten Maschinenteil (2) getragen und durch die Vorspannkraft in eine Aufnahmemulde (9), die in die Oberfläche des zweiten Maschinenteiles (3) eingearbeitet ist, eingedrückt;
1.7 jedem Verriegelungselement (6) ist eine Aufnahmemulde (9) zugeordnet.

2. Welle-Nabe-Verbindung nach Anspruch 1, dadurch gekennzeichnet, daß die Größe der zur Aufhebung des Formschlusses erforderlichen Axialkraft durch den Winkel der Abschrägung der Kopfflächen der Verriegelungselemente und/oder die Anzahl der verwendeten Verriegelungselemente (6) und/oder durch die Größe der Vorspannkraft an den Verriegelungselementen festlegbar ist.

3. Welle-Nabe-Verbindung nach einem der Ansprüche 1 oder 2, dadurch gekennzeichnet, daß die Vorspannkraft durch Federelement (7) erzeugbar ist.

4. Welle-Nabe-Verbindung nach einem der Ansprüche 1 bis 3, dadurch gekennzeichnet, daß die Verbindung der beiden Maschinenteile (2, 3) als Keilwellenverbindung mit Schiebe- oder Gleitsitz (1) ausgeführt ist.

5. Welle-Nabe-Verbindung nach einem der Ansprüche 1 bis 4, dadurch gekennzeichnet, daß die Verbindung der beiden Maschinenteile (2, 3) als wälzgelagerte Teleskopführung ausgeführt ist.

6. Welle-Nabe-Verbindung nach einem der Ansprüche 1 bis 5, dadurch gekennzeichnet, daß die Verbindung der beiden Maschinenteile (2, 3) als Kugelführung ausgeführt wird.

7. Welle-Nabe-Verbindung nach einem der Ansprüche 1 bis 6, dadurch gekennzeichnet, daß die Aufnahmemulde (9) keil- oder kegelförmig ausgeführt ist.

8. Welle-Nabe-Verbindung nach einem der Ansprüche 1 bis 7, gekennzeichnet durch die folgenden Merkmale:
8.1 jede Aufnahmemulde (9) ist in ein Einsatzstück eingearbeitet, das mit dem zweiten Maschinenteil eine bauliche Einheit bildet;
8.2 das Einsatzstück ist wärmebehandelt.

9. Welle-Nabe-Verbindung nach Anspruch 8, dadurch gekennzeichnet, daß das Einsatzstück ein wenigstens zweiteiliger Ring ist.

10. Welle-Nabe-Verbindung nach einem der Ansprüche 1 bis 9, gekennzeichnet durch folgende Merkmale:
10.1 1 das zweite Maschinenteil (3) ist in zwei Abschnitte (11, 12) unterteilt, die mittelbar miteinander verbunden sind und ein axiales Spiel (s) zueinander aufweisen;
10.2 zwischen beiden Abschnitten (11, 12) sind Dämpfungsglieder angeordnet.

11. Welle-Nabe-Verbindung nach Anspruch 10, dadurch gekennzeichnet, daß das Dämpfungsglied eine Tellerfeder ist.

12. Verwendung einer Welle-Nabe-Verbindung nach einem der Ansprüche 1 bis 11 bei Gelenkwellen.

## Claims

1. Shaft-hub connection between two co-axial machine parts for transmission of high torque in one operating extension - a first machine part (2) at the side of the drive and a second machine part (3) at the side of the output, withthe following features:
1.1 as of a specified axial load, both machine parts (2, 3) are displaceable relative to each other, and otherwise non-rotationally interconnected;
1.2 between both machine parts (2, 3) is provided a positive overload safety mechanism (4) with locking elements (6) by means of which both machine parts (2, 3) are up to a specified adjustable threshold value locked against axial displacement;
1.3 the overload safety mechanism (4) is designed and configured in such a manner that the positive link is lifted when the threshold is exceeded;
1.4 the individual locking elements (6) are pretensionable in the meaning of locking;
1.5 each individual locking element (6) is designed as a bolt, cross-sectionally seen with wedgeshaped slanted head surfaces;
1.6 each locking element is supported by the first machine part (2) and pushed by the retensional load into a receiving cavity (9) which is worked into the surface of the second machine part (3);
1.7 each locking element (6) is associated with a receiving cavity (9).

2. Shaft-hub connection according to Claim 1, **characterised in that** the value of the axial load required for lifting the positive link is set by the angle of slant of the head surfaces of the locking elements and/or the number of applied locking elements (6) and/or the value of the pretensional load at the locking elements.

3. Shaft-hub connection according to one of Claims 1 or 2, **characterised in that** the pretensional load is produced by a spring element (7).

4. Shaft-hub connection according to one of Claims 1 to 3, **characterised in that** the connection of both machine parts (2, 3) is configured as a wedged shaft connection with sliding or gliding seat(1).

5. Shaft-hub connection according to one of Claims 1 to 4, **characterised in that** the connection of both machine parts (2, 3) is configured as a roller mounted telescopic guide.

6. Shaft-hub connection according to one of Claims 1 to 5, **characterised in that** the connection of both machine parts (2, 3) is configured as a ball guide.

7. Shaft-hub connection according to one of Claims 1 to 6, **characterised in that** the receiving cavity (9) is of wedgeshaped or conical design.

8. Shaft-hub connection according to one of Claims 1 to 7, **characterised by** the following features:
8.1 each receiving cavity (9) is worked into an insert which together with the second machine part forms one unit;
8.2 the insert is heat-treated.

9. Shaft-hb connection according to Claim 8, **characterised in that** the insert is an at least two part ring.

10. Shaft-hub connection according to one of Claims 1 to 9, **characterised by** the following features:
10.1 the second machine part (3) is divided into two sections (11, 12) which are directly interconnected and have an axial play (s) relative to each other;
10.2 damping members are configured between both sections (11, 12).

11. Shaft-hub connection according to Claim 10, **characterised in that** the damping member is a circular spring.

12. Use of a shaft-hub connection according to one of Claims 1 to 11 with hinged shafts.

## Revendications

1. Liaison arbre-moyeu entre deux éléments de machine coaxiaux pour la transmission de couples de rotation élevés dans une chaîne cinématique - un premier élément de machine (2) côté entrée et un second élément de machine (3) côté sortie, présentant les caractéristiques suivantes:
1.1 Les deux éléments de machine (2, 3) peuvent être déplacés relativement l'un par rapport à l'autre à partir d'une certaine force axiale et sont d'ordinaire reliés entre eux rigides à la torsion;
1.2 Un mécanisme de protection contre les surcharges à liaison par obstacles (4) avec éléments de verrouillage (6) est prévu entre les deux éléments de machine (2, 3), servant à verrouiller les deux éléments de machine (2, 3) contre le déplacement axial jusqu'à une valeur de seuil déterminée réglable;
1.3 Le mécanisme de protection contre les surcharges (4) est conçu et disposé de telle sorte que la liaison par obstacle soit inhibée lorsque la valeur de seuil est dépassée par excès;
1.4 Les différents éléments de verrouillage (6) peuvent être précontraints au sens du verrouillage;
1.5 Chaque élément de verrouillage individuel (6) est conçu sous forme d'axe avec des portées de tête biseautées en coin, vues sur la section
1.6 Chaque élément de verrouillage individuel est porté par le premier élément de machine (2) et pressé sous l'effet de la force de précontrainte dans une cuvette de réception (9) pratiquée dans la surface du second élément de machine (3);
1.7 Une cuvette de réception (9) est allouée à chaque élément de verrouillage (6).

2. Liaison arbre-moyeu selon la revendication 1, caractérisée en ce que la grandeur de la force axiale nécessaire pour inhiber la liaison par obstacles peut être définie par l'angle du biseau des portées de tête des éléments de verrouillage et/ou par le nombre des éléments de verrouillage (6) utilisés et/ou par la grandeur de la force de précontrainte exercée sur les éléments de verrouillage.

3. Liaison arbre-moyeu selon l'une des revendications 1 ou 2, caractérisée en ce que la force de précontrainte peut être générée par un élément à ressort (7).

4. Liaison arbre-moyeu selon l'une des revendications 1 à 3, caractérisée en ce que la liaison des deux éléments de machine (2, 3) est réalisée sous forme de liaison cannelée avec ajustement appuyé ou ajustement glissant (1).

5. Liaison arbre-moyeu selon l'une des revendications 1 à 4, caractérisée en ce que la liaison des deux éléments de machine (2, 3) est réalisée sous forme de guidage télescopique logé sur roulement.

6. Liaison arbre-moyeu selon l'une des revendications 1 à 5, caractérisée en ce que la liaison des deux éléments de machine (2, 3) est réalisée sous forme de guidage à billes.

7. Liaison arbre-moyeu selon l'une des revendications 1 à 6, caractérisée en ce que la cuvette de réception (9) est conçue sous forme biaisée ou conique.

8. Liaison arbre-moyeu selon l'une des revendications 1 à 7, caractérisée par les caractéristiques suivantes:
8.1 Chaque cuvette de réception (9) est pratiquée dans un insert formant une unité constructive avec le second élément de machine;
8.2 L'insert a subi un traitement thermique.

9. Liaison arbre-moyeu selon la revendication 8, caractérisée en ce que l'insert est au moins une bague en deux parties.

10. Liaison arbre-moyeu selon l'une des revendications 1 à 9, caractérisée par les caractéristiques suivantes:
10.1 Le second élément de machine (3) est subdivisé en deux sections (11, 12) qui sont indirectement reliées entre elles et qui présentent un jeu axial (s) l'une par rapport à l'autre;
10.2 Des organes d'amortissement sont disposés entre les deux sections (11, 12).

11. Liaison arbre-moyeu selon la revendication 10, caractérisée en ce que l'organe d'amortissement est un ressort Belleville.

12. Utilisation d'une liaison arbre-moyeu selon l'une des revendications 1 à 11 pour les arbres articulés.
